# EUROPEAN PATENT APPLICATION

(11) **EP 4 645 189 A1**
(43) Date of publication of application: **05.11.2025**
(21) Application number: 25168830.5
(22) Date of filing: 07.04.2025
(51) Int. Cl.: G06Q 10/10, G06F 40/174, G06N 20/00, G06Q 50/18, G06Q 50/26

(54) **SYSTEMS AND METHODS FOR IMPLEMENTING AN ASSEMBLY OF BOTS IN A ROBOTIC PROCESS AUTOMATION (RPA) FOR GENERATING IMMIGRATION DOCUMENTS**

(30) Priority: 02.05.2024 US 202418653553
(71) Applicant: Envoy Global, Inc., Chicago, IL 60606 (US)
(72) Inventor: INAMPUDI, Mahi, Chicago, IL, 60606 (US); MUSALGAONKAR, Sandeep, Chicago, IL, 60606 (US); PEREZ, Tiffany, Chicago, IL, 60606 (US); UNDAMATLA, Siva, Chicago, IL, 60606 (US)
(74) Representative: Hoffmann Eitle

(57) **Abstract**

Systems and methods disclosed herein relate generally to generating an immigration petition. An orchestrator bot may obtain petitioner data and a case type classification value as input, invoke from a case type repository, based on the case type classification value, a task bot chain, wherein the task bot chain identifies one or more task bots selected from a plurality of task bots to create a subset of task bots to implement an execution sequence, and execute the subset of task bots according to the execution sequence. The subset of task bots may pre-process the petitioner data for injection into one or more digital forms, and generate, from the one or more digital forms, the immigration petition configured for printing on a paper of a given size.

## Description

### FIELD OF THE INVENTION

The present disclosure generally relates to generating an immigration petition for a petitioner, and in particular, to implementing an assembly of bots using robotic process automation (RPA).

### BACKGROUND

Conventional preparation of immigration petitions is a manual process that is time consuming, resource intensive, and error prone. The manual process involves information gathering via e-mail or an online form. The gathered information must be populated into immigration forms. Then the immigration petition, including documents, forms, and other evidence material, must be compiled and submitted. The process varies from case type to case type. Due to the manual effort involved, the attorneys and other legal staff may focus on the manual, repetitive work instead of client service and case strategy.

### SUMMARY

The present embodiments may relate to, *inter alia,* systems and methods for automatically generating immigration petitions using an assembly of bots. In one aspect, a system for generating an immigration petition may be provided. The system may include a server comprising one or more processors and a memory storing an orchestrator bot and a plurality of task bots. For example, in one instance, the orchestrator bot, when executed, may cause the one or more processors to: (1) obtain petitioner data and a case type classification value as input, (2) invoke from a case type repository, based on the case type classification value, a task bot chain, wherein the task bot chain identifies one or more task bots selected from the plurality of task bots to create a subset of task bots to implement an execution sequence, and (3) execute the subset of task bots according to the execution sequence. The one or more necessary task bots, when executed, may cause the one or more processors to: (4) pre-process the petitioner data for injection into one or more digital forms, and (5) generate, from the one or more digital forms, the immigration petition configured for printing on a paper of a given size. The system may include additional, less, or alternate functionality, including that discussed elsewhere herein.

In another aspect, a computer-implemented method for generating an immigration petition for a petitioner may be provided. The computer-implemented method may be implemented via one or more local or remote processors, servers, memory units, mobile devices, laptops, desktops, smart watches, and/or other electronic or electrical components, which may be in wired or wireless communication with one another. For example, in one instance, the computer-implemented method may include: (A) executing, by one or more processors, an orchestrator bot to cause the one or more processors to: (1) obtain petitioner data and a case type classification value as input, (2) invoke from a case type repository, based on the case type classification value, a task bot chain, wherein the task bot chain identifies one or more task bots selected from a plurality of task bots, a plurality of task bots, wherein each of the plurality of task bots is configured to execute an action, to create a subset of task bots to implement an execution sequence, and (3) execute the subset of task bots according to the execution sequence, (B) wherein the subset of task bots, when executed by the one or more processors, causes the one or more processors to (4) pre-process the petitioner data for injection into one or more digital forms, and/or (5) generate, from the one or more digital forms, the immigration petition configured for printing on a paper of a given size. The method may include additional, less, or alternate functionality or actions, including those discussed elsewhere herein.

In addition, the systems and methods for generating immigration petitions include improvements in computer functionality at least because the plurality of task bots include execution specific task bots that can be reorganized and/or reused in a plurality of case type execution sequences. The reuse and/or reorganization of the execution specific task bots reduces memory storage of a given computing system as a whole, because there is no longer a requirement to have specific, proprietary programs coded end-to-end to perform a specific task. Instead, the implementation is implemented by use of an orchestrator bot that can reuse and reorganize existing task bots thereby reducing memory storage needs and increasing efficiency. That is, instead of each case type execution sequence having its own custom computer instructions for generating an immigration petition, a plurality of case types may share one or more task bots. This results in less memory usage by the server running the execution sequence. Further, when a given task bot is debugged, has its errors reduced, or is otherwise updated, a given end-to-end programming task that executes that task bot likewise is improved by virtue of depending on the improved task bot. That is, when a task bot is debugged, has its errors reduced, or is otherwise updated, such debugging, error reduction, or otherwise updates are replicated throughout the system as a whole when the orchestrator bot implements the task bot across various tasks, software, methods, or otherwise as described herein. Thus, a computing system implementing the one or more task bot(s) together with the orchestrator bot receives increased improvements (e.g., through reducing bugs, errors, and by receiving more updates) compared to prior art systems that use specific, proprietary software for implementing single, wholistic tasks, where such proprietary software must be independently debugged, error reduced, and/or otherwise updated.

Further, improvements to the underlying computing system include the disclosed machine learning (ML) models, such as the large language model (LLM) and the optical character recognition (OCR) model, which may receive feedback regarding their output and improve their predictions over time.

In addition, the present disclosure includes specific features other than what is well-understood, routine, conventional activity in the field, or adding unconventional steps that confine the claim to a particular useful application, e.g., generating the immigration petition configured for printing on a paper of a given size, as further described herein.

Additional, alternate and/or fewer actions, steps, features and/or functionality may be included in an aspect and/or embodiments, including those described elsewhere herein.

### BRIEF DESCRIPTION OF THE DRAWINGS

The figures described below depict various aspects of the applications, methods, and systems disclosed herein. It should be understood that each figure depicts one embodiment of a particular aspect of the disclosed applications, systems, and methods, and that each of the figures is intended to accord with a possible embodiment thereof. Furthermore, wherever possible, the following description refers to the reference numerals included in the following figures, in which features depicted in multiple figures are designated with consistent reference numerals.
Figure 1 illustrates an exemplary computing environment for generating immigration petitions.
Figure 2 illustrates an exemplary system diagram for generating immigration petitions.
Figure 3 illustrates an exemplary flow diagram for generating immigration petitions.
Figure 4 illustrates a combined block and logic diagram in which exemplary computer-implemented methods and systems for training a machine learning language model are implemented.
Figure 5A illustrates a combined block and logic diagram of an exemplary server generating immigration documents using a machine learning language model.
Figure 5B illustrates a combined block and logic diagram of an exemplary server performing OCR using a machine learning OCR model.
Figure 6 illustrates a computer-implemented method for generating immigration petitions.

Advantages will become more apparent to those skilled in the art from the following description of the preferred embodiments which have been shown and described by way of illustration. As will be realized, the present embodiments may be capable of other and different embodiments, and their details are capable of modification in various respects. Accordingly, the drawings and description are to be regarded as illustrative in nature and not as restrictive.

### DETAILED DESCRIPTION

### FIELD OF THE DISCLOSURE

The systems and methods disclosed herein generally relate to, *inter alia,* generating an immigration petition using an orchestrator bot to implementing plurality of task bots. Some embodiments may include one or more of: obtaining petitioner (e.g., applicant) data and a case type, invoking an orchestrator bot to select and/or implement a task bot chain, execute necessary task bots, pre-process petitioner data for injection into forms, generate the immigration petition, and/or prepare the immigration petition for printing on a printer, e.g., including printing on one or more sizes and/or types of paper and/or electronic forms.

### EXEMPLARY COMPUTING ENVIRONMENT

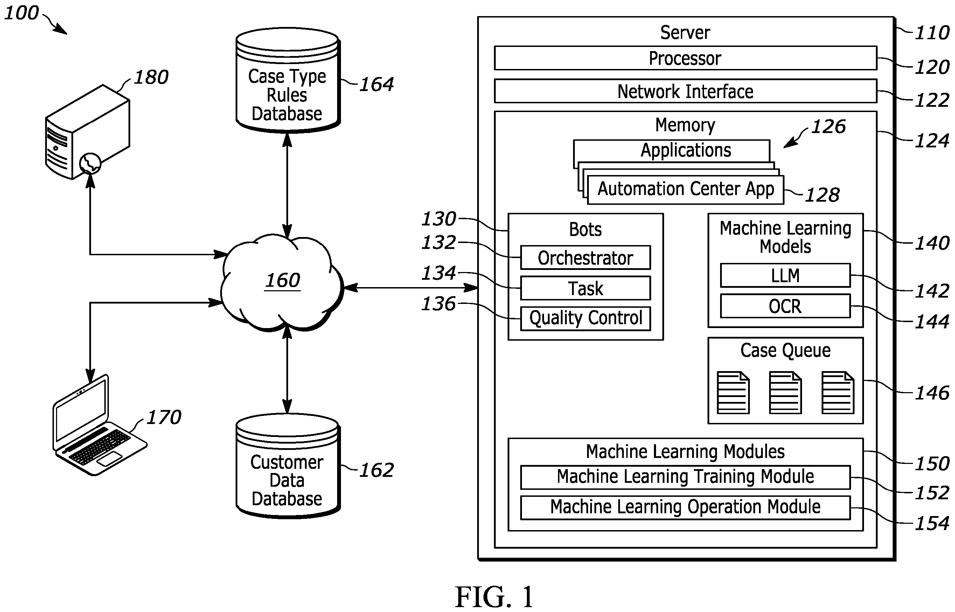

Figure 1 depicts an example computing environment 100 in which techniques for generating immigration petitions are implemented. Although Figure 1 depicts certain entities, components, equipment, and devices, it should be appreciated that additional or alternate entities, components, equipment, and devices are also possible.

As illustrated in Figure 1, the computing environment 100 includes, in one embodiment, a server 110 which can perform the at least some of the functionalities and techniques disclosed herein, such as retrieving petitioner data, filling out immigration application forms, and so on. In some embodiments, the server 110 includes only one server or multiple servers that are co-located or remotely distributed. The server 110 may be part of a cloud network or may otherwise communicate with other hardware or software components within one or more cloud computing environments to send, retrieve, or otherwise analyze data or information described herein. In some example embodiments, the computing environment 100 comprises an on-premises computing environment, a multi-cloud computing environment, a public cloud computing environment, a private cloud computing environment, and/or a hybrid cloud computing environment.

In one aspect, the example computing environment 100 includes a network 160 comprising any suitable network or combination of networks, such as a local area network (LAN), a wide area network (WAN), the Internet, or a combination thereof. The network 160 may include a wireless cellular network (e.g., 4G, 5G, 6G, etc.). Generally, the network 160 enables bidirectional communication between the server 110 and at least one user device 170 and at least one government website 180. In one embodiment, the network 160 comprises a cellular base station, such as cell tower(s), communicating to the one or more other components of the computing environment 100 via wired/wireless communications based upon any one or more of various mobile phone standards, including NMT, GSM, CDMA, UMTS, LTE, 5G, 6G, or the like. Additionally or alternatively, the network 160 may comprise one or more routers, wireless switches, and/or other such wireless nodes communicating with the components of the computing environment 100 via wired and/or wireless communications based upon any one or more of various communications standards, including by non-limiting example, IEEE 802.11a/ac/ax/b/c/g/n (Wi-Fi), Bluetooth, and/or the like.

In one aspect, the server 110 includes a processor 120. In some embodiments, the processor 120 includes one or more central processing units (CPUs), graphics processing units (GPUs), field programmable gate arrays (FPGAs), and/or any other suitable processor. The processor 120 may be communicatively coupled to a memory 124 via a computer bus (not depicted) to create, read, update, transmit, delete, or otherwise access or interact with the data, data packets, or otherwise electronic signals to and from the processors 120 and memory 124, e.g., in order to implement or perform the machine-readable instructions, methods, processes, elements, or limitations, as illustrated, depicted, or described for the various flowcharts, illustrations, diagrams, figures, and/or other disclosure herein. The processor 120 interfaces with the memory 124 via a computer bus to execute an operating system and/or computing instructions contained therein, and/or to access other services/aspects. For example, the processor 120 interfaces with the memory 124 via the computer bus to create, read, update, delete, or otherwise access or interact with the data stored in the memory 124, the customer data database 162, and/or the case type rules database 164.

In one aspect, the server 110 includes a network interface 122, which allows the server 110 to communicate over the network 160 (e.g., with user device 170, the customer data database 162, the case type rules database 164, and/or the government website 180) via any suitable wired and/or wireless connection, e.g., using any suitable controller(s) of the network interface 122. In some embodiments, the network interface 122 includes one or more transceivers (e.g., WWAN, WLAN, and/or WPAN transceivers) functioning in accordance with IEEE reference standards, 3GPP reference standards, and/or other reference standards that receive and transmit data via external/network ports of the server 110 connected to computer network 160.

In some embodiments, the memory 124 includes one or more memories and/or forms of volatile and/or non-volatile, fixed and/or removable memory, such as read-only memory (ROM), electronic programmable read-only memory (EPROM), random access memory (RAM), erasable electronic programmable read-only memory (EEPROM), and/or other hard drives, flash memory, MicroSD cards, and others. The memory 124 stores machine-readable instructions executable by the processor 120, including any of one or more application(s) 126. The memory 124 also stores an operating system (e.g., Microsoft Windows, Linux, UNIX, etc.) capable of facilitating the functionalities, applications, methods, or other software as discussed herein.

In the example embodiment of Figure. 1, the software applications 126 include an automation center app 128. The automation center app 128 provides various functionalities described in further detail below, such as receiving petitioner data and a case type, outputting an immigration petition, etc.

In one aspect, the server 110 includes and/or has access to (e.g., via network 160), the customer data database 162 and/or the case type rules database 164. In some embodiments, the customer data database 162 and/or the case type rules database 164 include a relational database, such as Oracle, DB2, MySQL, a NoSQL based database, such as MongoDB, or another suitable database. The customer data database 162 stores data and/or datasets for one or more customers, such as petitioner data, among other things. The case type rules database 164 stores data and/or datasets for one or more case types, e.g., H-1B visa, such as a task bot chain, among other things. A dataset may include one or more types of data, records, files, etc. The terms "data" and "dataset" are used interchangeably herein.

In some embodiments, the memory 124 stores a plurality of bots 130, implemented as respective sets of computer-executable instructions, as described herein.

In one embodiment, the bots 130 include an orchestrator bot 132. The orchestrator bot 132 may retrieve cases, or data regarding cases, from the automation center app 128 and insert the retrieved cases into the case queue 146. The orchestrator bot 132 may fetch case type rules and/or a task bot chain from the case type rules database 164. The orchestrator bot 132 may select, invoke, execute, and/or monitor the task bots 134 and/or the quality control bots 136.

In one embodiment, the bots 130 include a plurality of task bots 134. Each task bot 134 may be programmed to perform a specific task, e.g., drafting a cover letter. Different task bots 134 may be invoked for each case type. One or more of the task bots 134 may send a prompt to and receive output text from a large language model (LLM) 142.

In one embodiment, the bots 130 include one or more quality control bots 136. The one or more quality control bots 136 may examine a draft immigration petition for errors. The one or more quality control bots 136 may invoke an optical character recognition (OCR) 144 machine learning (ML) model.

In some aspects, the memory 124 includes one or more ML models 140. The ML models 140 may be referred to at times herein as a "model" or "algorithm." In some embodiments, the ML models 140 include an LLM 142. Generally speaking, the LLM 142 receives a prompt and generates output text. In some embodiments, the ML models 140 include an OCR model 144. In general, the OCR model 144 receives image data and detects handwritten or typed characters in the image data.

In some aspects, the memory 124 includes the case queue 146. The case queue 146 may include one or more new, in-progress, and/or completed cases. The cases in the case queue 146 may include letters, documents, forms, petitioner data, or other data, including, for example, data for completing a given petition or form.

In some aspects, the memory 124 includes an ML module 150. The ML module 150 may include an ML training module (MLTM) 152 and/or an ML operation module (MLOM) 154. In some embodiments, at least one of a plurality of ML methods and algorithms may be applied by the ML module 150, which may include, but are not limited to: linear or logistic regression, instance-based algorithms, regularization algorithms, decision trees, Bayesian networks, cluster analysis, association rule learning, artificial neural networks, deep learning, combined learning, reinforced learning, dimensionality reduction, and support vector machines. In various embodiments, the implemented ML methods and algorithms are directed toward at least one of a plurality of categorizations of ML, such as supervised learning and reinforcement learning.

In one aspect, the ML based algorithms may be included as a library or package executed on the server 110. For example, libraries may include the TensorFlow based library, the PyTorch library, the HuggingFace library, and/or the scikit-learn Python library.

In one embodiment, the ML module 150 employs supervised learning, which involves identifying patterns in existing data to make predictions about subsequently received data. Specifically, the ML model is "trained" (e.g., via MLTM 152) using training data, which includes example inputs and associated example outputs. Based upon the training data, the ML model 150 may generate a predictive function which maps outputs to inputs and may utilize the predictive function to generate ML outputs based upon data inputs. The exemplary inputs and exemplary outputs of the training data may include any of the data inputs or ML outputs described above. In the exemplary embodiments, a processing element may be trained by providing it with a large sample of data with known characteristics or features.

In yet another embodiment, the ML module 150 may employ reinforcement learning, which involves optimizing outputs based upon feedback from a reward signal. Specifically, the ML module 150 may receive a user-defined reward signal definition, receive a data input, utilize a decision-making model to generate the ML output based upon the data input, receive a reward signal based upon the reward signal definition and the ML output, and alter the decision-making model so as to receive a stronger reward signal for subsequently generated ML outputs. Other types of ML may also be employed, including deep or combined learning techniques.

The MLTM 152 may receive labeled data at an input layer of a model having a networked layer architecture (*e.g*., an artificial neural network, a convolutional neural network, etc.) for training the one or more ML models. The received data may be propagated through one or more connected deep layers of the ML model to establish weights of one or more nodes, or neurons, of the respective layers. Initially, the weights may be initialized to random values, and one or more suitable activation functions may be chosen for the training process. The present techniques may include training a respective output layer of the one or more ML models. The output layer may be trained to output a prediction, for example.

The MLOM 154 may comprise a set of computer-executable instructions implementing ML model loading, configuration, initialization and/or operation functionality. The MLOM 154 may include instructions for storing trained models. Once trained, the one or more trained ML models may be operated in inference mode, whereupon when provided with de novo input that the model has not previously been provided, the model may output one or more predictions, classifications, etc., as described herein.

In some aspects, the server 110 is in communication with a user device 170. In one embodiment, the user device 170 is associated with an attorney or other legal staff responsible for immigration petitions. In another embodiment, the user device 170 is associated with a petitioner or an employer of the petitioner. In some embodiments, the user device 170 comprises one or more computers and/or multiple, redundant, or replicated client computers accessed by one or more users. In some embodiments, the user device 170 includes one or more computing devices (e.g., desktop computer, laptop computer, terminal), mobile devices, wearables, smart watches, smart contact lenses, smart glasses, AR glasses/headsets, VR glasses/headsets, mixed or extended reality glasses/headsets, and/or other suitable electronic or electrical components. The user device 170 includes a memory and a processor for, respectively, storing and executing one or more modules, computer-executable instructions, etc. In some embodiments, the memory includes one or more suitable storage media such as a magnetic storage device, a solid-state drive, random access memory (RAM), etc. The user device 170 includes a display, such as a graphical user interface (GUI) for presenting information to the user. The user device 170 accesses services or other components of the computing environment 100 via the network 160. The user device 170 is used to request or receive information/data from, and or provide information/data to, one or more applications 126 of the server 110 (e.g., the automation center app 128). The user device 170 may access the one or more applications 126 via a web browser, client app, and/or mobile app.

In some aspects, the server 110 also communicates with one or more government websites 180 via the network 160. For example, a task bot 134 may automatically fill out an immigration web form, download an updated form, or retrieve a travel history of a petitioner from the government website 180.

### EXEMPLARY SYSTEM DIAGRAM

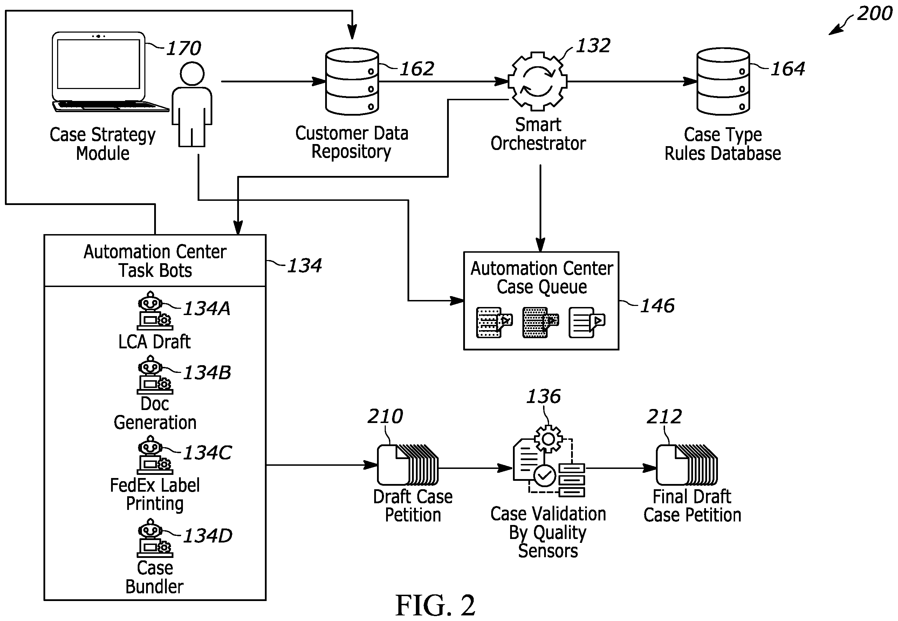

Figure 2 illustrates an exemplary system environment 200 in which methods and systems for generating immigration petitions may be performed, in accordance with various aspects discussed herein. The system environment 200 may be implemented on one or more servers 110 and user devices 170.

In one aspect, the system environment 200 includes the user device 170. A user may access the automation center app 128 via the user device 170. The user may create a new case using a case strategy module in the automation center app 128 by inputting petitioner data and a case strategy. The petitioner data may be saved into a customer data repository 162. The case strategy may include the case type. The new case created in the automation center app 128 may be added to the automation center case queue 146. The user may monitor the case status and may receive a final draft case petition 212 in the automation center app 128.

In one aspect, the system environment 200 includes the customer data repository 162. The automation center app 128 may store and retrieve petitioner and/or customer data to and from the customer data repository 162.

In one aspect, the system environment 200 includes the smart orchestrator bot 132. The smart orchestrator bot 132 may retrieve petitioner and/or customer data from the customer data repository 162. The smart orchestrator bot 132 may retrieve cases sequentially from the automation center case queue 146 for processing. The smart orchestrator bot 132 may fetch the case type-specific rules and task bot chain from the case type rules database 164. The smart orchestrator bot 132 may invoke and orchestrate the execution of one or more necessary task bots from the plurality of automation center task bots 134 in the order specified in the task bot chain.

In one aspect, the system environment 200 includes the case type rules database 164. The case type rules database 164 may include rules for completing an immigration petition for each case type. The case type rules database 164 may include a task bot chain for each case type. The task bot chain may include a list of one or more necessary task bots, from the automation center task bots 134, as well as an execution sequence for the case type.

In one aspect, the system environment 200 includes the automation center case queue 146. The automation center case queue 146 may include one or more new, in-progress, and/or completed cases.

In one aspect, the system environment 200 includes the automation center task bots 134. In some embodiments, the automation center task bots 134 receive petition forms, petitioner and/or customer data, and other input data from the smart orchestrator bot 132. In some embodiments, the automation center task bots 134 retrieve input data from the customer data repository 162. Each of the automation center task bots 134 may be customized for a specific case type or may be applicable to a plurality of case types. The automation center task bots 134 include execution specific task bots that can be reorganized and/or reused in a plurality of case type execution sequences. The reuse and/or reorganization of the execution specific task bots reduces memory storage of a given computing system as a whole, because there is no longer a requirement to have specific, proprietary programs coded end-to-end to perform a specific task. Instead, the implementation is implemented by use of an orchestrator bot that can reuse and reorganize existing task bots thereby reducing memory storage needs and increasing efficiency. That is, instead of each case type execution sequence having its own custom computer instructions for generating an immigration petition, a plurality of case types may share one or more task bots. This results in less memory usage by the server running the execution sequence. Further, when a given task bot is debugged, has its errors reduced, or is otherwise updated, a given end-to-end programming task that executes that task bot likewise is improved by virtue of depending on the improved task bot. That is, when a task bot is debugged, has its errors reduced, or is otherwise updated, such debugging, error reduction, or otherwise updates are replicated throughout the system as a whole when the orchestrator bot implements the task bot across various tasks, software, methods, or otherwise as described herein. Thus, a computing system implementing the one or more task bot(s) together with the orchestrator bot receives increased improvements (e.g., through reducing bugs, errors, and by receiving more updates) compared to prior art systems that use specific, proprietary software for implementing single, wholistic tasks, where such proprietary software must be independently debugged, error reduced, and/or otherwise updated.

In some embodiments, the automation center task bots 134 include a labor condition application (LCA) task bot 134A. The LCA task bot 134A may be a web browser plug-in or automated script that completes one or more LCA form fields on the government website 180, such as the Department of Labor's Foreign Labor Application Gateway. The LCA task bot 134A may use petitioner data from the customer data repository 162 to complete the LCA form fields. The LCA task bot 134A may download the filed and certified LCA from the government website 180 and save the LCA into the automation center app 128. The LCA task bot 134A may update the case with the relevant LCA information in the automation center app 128.

In some embodiments, the automation center task bots 134 include a document generation task bot 134B. The document generation task bot 134B may generate one or more documents, such as a letter of support, a filing letter, and a notice of filing letter. The letters may be generated on appropriate letterhead and may contain petitioner data from the customer data repository 162. The document generation task bot 134B may submit a prompt and the petitioner data to the LLM 142 to cause the LLM 142 to generate the text of one or more documents or letters.

In some embodiments, the automation center task bots 134 include a shipping label task bot 134C. The shipping label task bot 134C may fill out a shipping label for mailing a completed immigration case petition.

In some embodiments, the automation center task bots 134 include a signature and bundle task bot 134D. The signature and bundle task bot 134D may assemble completed forms, documents, and/or letters into a draft case petition 210. The draft case petition 210 may be in PDF or any other suitable format. The signature and bundle task bot 134D may apply available attorney and/or employer signatures to the draft case petition 210.

In one aspect, the system environment 200 includes one or more quality control bots 136. The quality control bots 136 may inspect the draft case petition 210 for potential errors. The quality control bots may invoke the OCR model 144 to compare images of typewritten text in the petitioner data to the draft case petition 210. The quality control bots 136 may notify a user via the automation center app 128 about potential errors in the draft case petition 210. The quality control bots 136 may generate a final draft case petition 212 from the draft case petition.

### EXEMPLARY CASE FLOW DIAGRAM

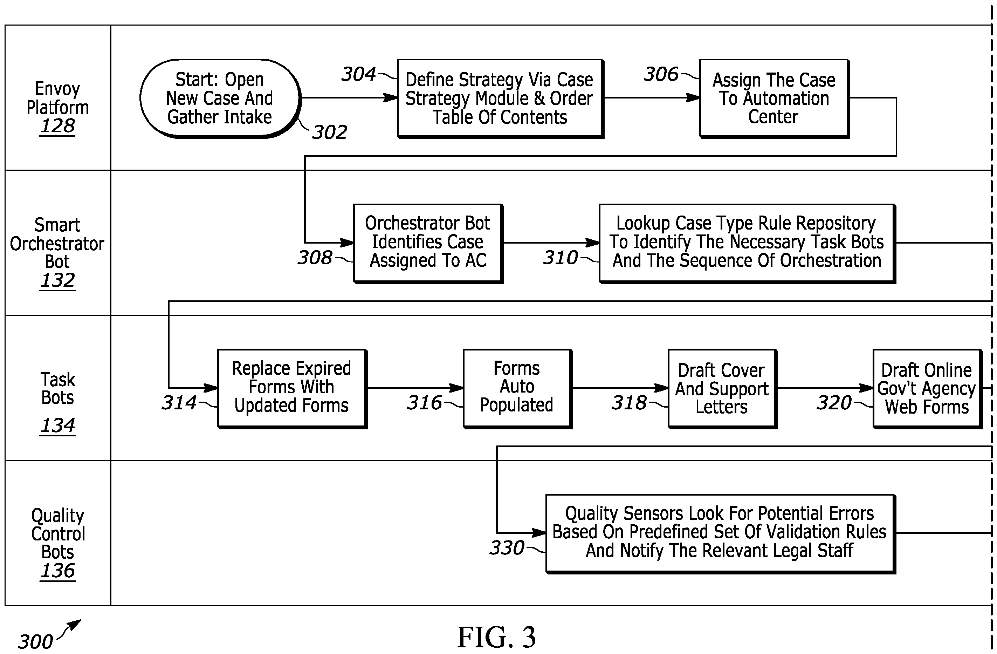

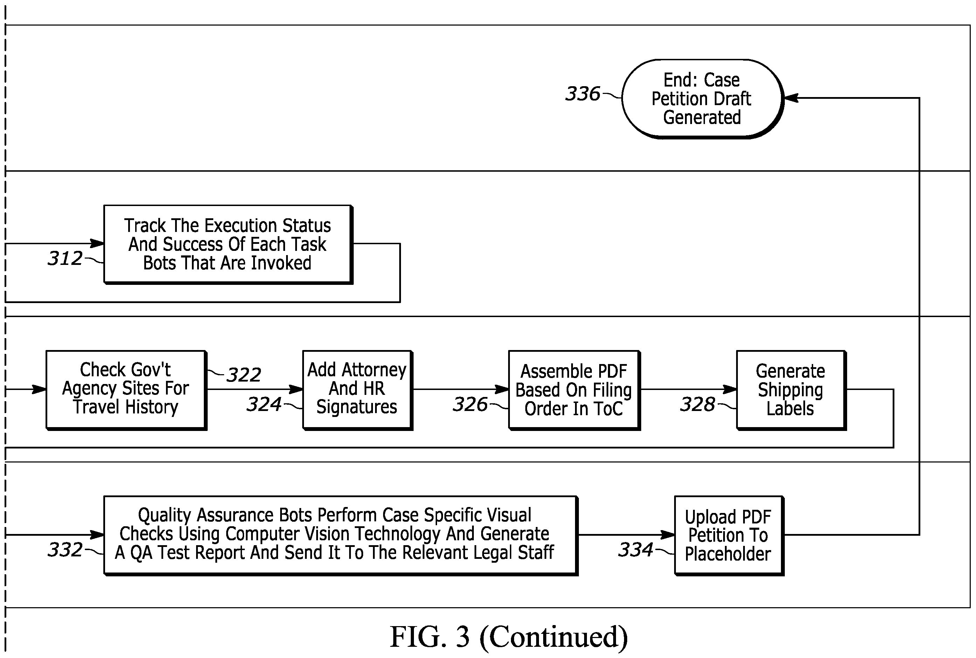

Figure 3 illustrates an exemplary case flow 300 for generating immigration petitions, in accordance with various aspects discussed herein. The case flow 300 may be implemented on one or more servers 110 and user devices 170.

In one aspect, the case flow 300 includes at step 302 opening a new case and gathering intake information via the automation center app 128. A user may manually input the intake information, or the intake information may be retrieved from a data source, such as the customer data database 162. The intake information may include the petitioner's name, citizenship, employer, education, work history, etc.

In one aspect, the case flow 300 includes at step 304 defining the case strategy and ordering a table of contents via the automation center app 128. Defining the case strategy may include identifying the case type, e.g., H-1B visa. Based upon the case strategy, the automation center app 128 may output a table of contents. The table of contents may list the documents, forms, and/or letters to be included in the case petition.

In one aspect, the case flow 300 includes at step 306 assigning the new case to the case queue 146 via the automation center app 128.

In one aspect, the case flow 300 includes at step 308 identifying, by the orchestrator bot 132, the new case assigned to the case queue 146. The orchestrator bot 132 may be notified about the new case by the automation center app, or the orchestrator bot may directly monitor the case queue 146.

In one aspect, the case flow 300 includes at step 310 identifying the necessary task bots and the execution sequence via the orchestrator bot 132. The orchestrator bot 132 may look up the necessary task bots and the execution sequence based on the case type. The necessary task bots list and the execution sequence may be retrieved from a data source, such as the case type rules database 164.

In one aspect, the case flow 300 includes at step 312 executing and tracking the execution status of the necessary task bots via the orchestrator bot 132. The orchestrator bot 132 may execute the necessary task bots 134 based upon the execution sequence.

In one aspect, the case flow 300 includes at step 314 replacing expired forms with updated forms via the one or more necessary task bots 134. The one or more necessary task bots 134 may check the one or more government websites 180 for a form revision date and compare the form revision date to the revision date of the existing forms. If the comparison indicates that newer forms are available, the one or more necessary task bots 134 may download the newer forms and replace the existing forms.

In one aspect, the case flow 300 includes at step 316 automatically populating one or more forms via one or more necessary task bots 134. Each of the one or more necessary task bots 134 may be configured to populate a specific form type. The forms may be populated with petitioner data and/or employer data from the intake form, the customer data database 162, the case strategy, or any other suitable data source.

In one aspect, the case flow 300 includes at step 318 drafting cover and support letters via the one or more necessary task bots 134. Each of the one or more necessary task bots 134 may be configured to draft a specific type of cover or support letter. The one or more necessary task bots 134 may submit petitioner data, employer data, case strategy, etc. and a prompt requesting a cover letter or support letter to the LLM 142. The LLM 142 may output the text of the requested cover letter or support letter. The one or more necessary task bots 134 may generate the cover and support letters on letterhead.

In one aspect, the case flow 300 includes at step 320 completing online government agency web forms via the one or more necessary task bots 134. Each of the one or more necessary task bots 134 may be configured to complete a specific type of online form. The one or more necessary task bots 134 may submit petitioner data, employer data, case strategy, etc. to complete the online forms. The online government agency web forms may be hosted on the government agency website 180.

In one aspect, the case flow 300 includes at step 322 retrieving a travel history of the petitioner via the one or more necessary task bots 134. The travel history may be retrieved from the government agency website 180.

In one aspect, the case flow 300 includes at step 324 adding electronic signatures to letters, documents, and forms via the one or more necessary task bots 134. The electronic signatures may be scanned copies of the petitioner's, attorney's, or employer's signature.

In one aspect, the case flow 300 includes at step 326 assembling the draft case petition 210 via the one or more necessary task bots 134. The letters, documents, and forms may be assembled in the order specified in the table of contents.

In one aspect, the case flow 300 includes at step 328 generating one or more shipping labels via the one or more necessary task bots 134 for mailing the completed petition.

In one aspect, the case flow 300 includes at step 330 examining the letters, documents, and forms for potential errors via the one or more quality control bots 136. The quality control bots 136 may be configured to examine a specific type of letter, document, or form. The quality control bots 136 may examine the letters, documents, and forms based on a predefined set of validation rules. The validation rules may ensure that one or more required fields have been completed, telephone numbers a specified number of digits, the names and addresses are consistent across multiple letters, documents, and forms, etc. If an error is detected, the quality control bots 136 may notify the relevant user(s) via the automation center app 128.

In one aspect, the case flow 300 includes at step 332 performing visual checks of the letters, documents, and forms via the one or more quality control bots 136. The one or more quality control bots 136 may compare scans or images of petitioner documents to the letters, documents, and forms using OCR technology. For example, the quality control bots 136 may provide the scans or images as input to the OCR model 144 and may receive text as output. As a result of the visual checks, the quality control bots 136 may generate a quality assurance test report and send the report to the relevant user(s) via the automation center app 128.

In one aspect, the case flow 300 includes at step 334 uploading the final draft case petition 212 to the case queue 146 via the one or more quality control bots 136. In one aspect, the case flow 300 includes at step 336 notifying the relevant user(s), via the automation center app 128, that the final draft case petition 212 has been generated and is available for review.

### SUPERVISED FINE-TUNING MACHINE LEARNING (ML) MODEL

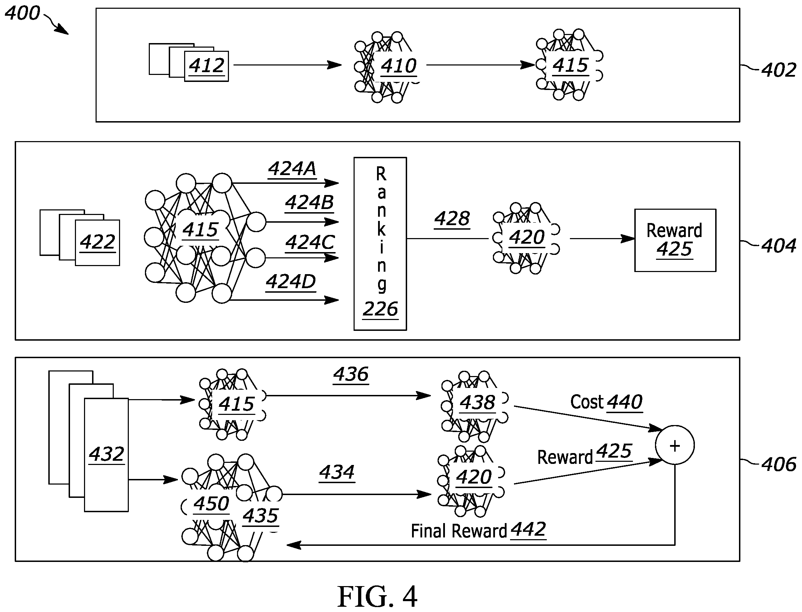

Figure 4 depicts an exemplary combined block and logic diagram 400 for training an ML model, such as LLM 142, in which the techniques described herein may be implemented, according to some embodiments. Some of the blocks in Figure 4 may represent hardware and/or software components, other blocks may represent data structures or memory storing these data structures, registers, or state variables (*e.g*., 412), and other blocks may represent output data (*e.g*., 425). Input and/or output signals may be represented by arrows labeled with corresponding signal names and/or other identifiers. The methods and/or systems may include one or more servers 402, 404, 406, such as the server 110 or an external computing device.

In one aspect, the server 402 may fine-tune a pretrained language model 410. The pretrained language model 410 may be obtained by the server 402 and/or be stored in a memory, such as the memory 124. The pretrained language model 410 may be loaded into an ML training module, such as the MLTM 152, by the server 402 for retraining/fine-tuning. A supervised training dataset 412 may be used to fine-tune the pretrained language model 410 wherein each data input prompt to the pretrained language model 410 may have a known output response for the pretrained language model 410 to learn from. The supervised training dataset 412 may be stored in a memory of the server 402, *e.g*., the memory 124. In one aspect, the data labelers may create the supervised training dataset 412 prompts and/or appropriate responses. The pretrained language model 410 may be fine-tuned using the supervised training dataset 412, resulting in the SFT ML model 415, which may provide appropriate responses to user prompts once trained. The trained SFT ML model 415 may be stored in a memory of the server 402, *e.g*., memory 124.

In some embodiments, the server 402 may fine-tune the pretrained language model 410 using a set of vectors associated with a set of training data. In some instances, the set of training data may include (1) prompts associated with immigration documents, (2) petitioner data, and/or (3) completed immigration documents. Creating the set of vectors may include (1) splitting the text of the prompts into semantic clusters, and/or (2) encoding the semantic clusters as the set of vectors. The semantic clusters may be one or more words, a portion of a word, or a character. A distance between the vectors (*e.g*., a cosine distance or a Euclidean distance) may depend on a relevance between the semantic clusters corresponding to the vectors.

### EXEMPLARY TRAINING OF THE MODEL

In one aspect, training the language model 450 may include the server 404 training a reward model 420 to provide as an output a scaler value/reward 425. The reward model 420 may be required to leverage Reinforcement Learning with Human Feedback (RLHF) in which a model (*e.g*., language model 450) learns to produce outputs which maximize its reward 425, and/or in doing so may provide responses which are better aligned to user prompts.

Training the reward model 420 may include the server 404 providing a single prompt 422 to the SFT ML model 415 as an input. The input prompt 422 may be provided via an input device (*e.g*., a keyboard) via an application of the server, such as automation center app 128. The prompt 422 may be previously unknown to the SFT ML model 415, *e.g*., the labelers may generate new prompt data, the prompt 422 may include petitioner data stored on the customer data database 162, and/or any other suitable prompt data. The SFT ML model 415 may generate multiple, different output responses 424A, 424B, 424D, 424D to the single prompt 422. The server 404 may output the responses 424A, 424B, 424D, 424D via an I/O module to a user interface device, such as a display (*e.g*., as text responses), a speaker (*e.g*., as audio/voice responses), and/or any other suitable manner of output of the responses 424A, 424B, 424D, 424D for review by the data labelers.

The data labelers may provide feedback via the server 404 on the responses 424A, 424B, 424D, 424D when ranking 426 them from best to worst based upon the prompt-response pairs. The data labelers may rank 426 the responses 424A, 424B, 424D, 424D by labeling the associated data. The ranked prompt-response pairs 428 may be used to train the reward model 420. In one aspect, the server 404 may load the reward model 420 via an ML module (*e.g*., the ML module 150) and/or train the reward model 420 using the ranked response pairs 428 as input. The reward model 420 may provide as an output the scalar reward 425.

In one aspect, the scalar reward 425 may include a value numerically representing a human preference for the best and/or most expected response to a prompt, *i.e.,* a higher scaler reward value may indicate the user is more likely to prefer that response, and/or a lower scalar reward may indicate that the user is less likely to prefer that response. For example, inputting the "winning" prompt-response (*i.e.,* input-output) pair data to the reward model 420 may generate a winning reward. Inputting a "losing" prompt-response pair data to the same reward model 420 may generate a losing reward. The reward model 420 and/or scalar reward 425 may be updated based upon labelers ranking 426 additional prompt-response pairs generated in response to additional prompts 422.

In one example, a data labeler may provide to the SFT ML model 415 as an input prompt 422, "Describe a car." The input may be provided by the labeler via the user device 170 over network 160 to the server 404 running the automation center app 128 utilizing the SFT ML model 415. The SFT ML model 415 may provide as output responses to the labeler via the user device 170: (i) "a car has four wheels" 424A; (ii) "cars are used to transport occupants between locations" 424B; (iii) "cars have an accelerator pedal and a brake pedal" 424C; and/or (iv) "cars can have internal combustion engines or electric motors" 424D. The data labeler may rank 426, via labeling the prompt-response pairs, prompt-response pair 422/424B as the most preferred answer; prompt-response pair 422/424A and 422/424C as less preferred answers; and prompt-response 422/424D as the least preferred answer. The labeler may rank 426 the prompt-response pair data in any suitable manner. The ranked prompt-response pairs 428 may be provided to the reward model 420 to generate the scalar reward 425.

While the reward model 420 may provide the scalar reward 425 as an output, the reward model 420 may not generate a response (*e.g*., text). Rather, the scalar reward 425 may be used by a version of the SFT ML model 415 to generate more accurate responses to prompts, *i.e.,* the SFT model 415 may generate the response, such as text to the prompt, and/or the reward model 420 may receive the response to generate a scalar reward 425 of how well humans perceive it. Reinforcement learning may optimize the SFT model 415 with respect to the reward model 420 which may realize the configured ML chatbot model 450.

### REINFORCEMENT LEARNING FROM HUMAN FEEDBACK (RLHF) TO TRAIN THE MACHINE LEARNING (ML) CHATBOT MODEL

In one aspect, the server 406 may train the language model 450 (*e.g*., via the MLTM 152) to generate a response 434 to a random, new and/or previously unknown user prompt 432. To generate the response 434, the language model 450 may use a policy 435 (*e.g*., algorithm) which it learns during training of the reward model 420, and/or in doing so may advance from the SFT model 415 to the language model 450. The policy 435 may represent a strategy that the language model 450 learns to maximize its reward 425. As discussed herein, based upon prompt-response pairs, a human labeler may continuously provide feedback to assist in determining how well the language model's 450 responses match expected responses to determine rewards or incentives 425. The rewards 425 (such as discounts, incentives, or other cost savings) may feed back into the language model 450 to evolve the policy 435. Thus, the policy 435 may adjust the parameters of the language model 450 based upon the rewards 425 it receives for generating good responses. The policy 435 may update as the language model 450 provides responses 434 to additional prompts 432.

In one aspect, the response 434 of the language model 450 using the policy 435 based upon the reward 425 may be compared using an adjustment function 438 to the SFT ML model 415 (which may not use a policy) response 436 of the same prompt 432. The adjustment function 438 may be trained in a similar manner and/or contemporaneous with the reward model 420. The server 406 may compute an adjustment 440 based upon the adjustment function 438 of the responses 434, 436. The adjustment 440 may reduce the distance between the responses 434, 436, *i.e.,* a statistical distance measuring how one probability distribution is different from a second, in one aspect the response 434 of the language model 450 versus the response 436 of the SFT model 415. Using the adjustment 440 to reduce the distance between the responses 434, 436 may avoid a server over-optimizing the reward model 420 and/or deviating too drastically from the human-intended/preferred response. Without the adjustment 440, the language model 450 optimizations may result in generating responses 434 which are unreasonable but may still result in the reward model 420 outputting a high reward 425.

The responses 434 of the language model 450 using the current policy 435 may be passed by the server 406 to the rewards model 420, which may return the scalar reward 225. The language model 450 response 434 may be compared via the adjustment function 438 to the SFT ML model 415 response 436 by the server 406 to compute the adjustment 440. The server 406 may generate a final reward 442 which may include the scalar reward 425 offset and/or restricted by the adjustment 440. The final reward 442 may be provided by the server 406 to the language model 450 and/or may update the policy 435, which in turn may improve the functionality of the language model 450.

To optimize the language model 450 over time, RLHF via the human labeler feedback may continue ranking 426 responses of the language model 450 versus outputs of earlier/other versions of the SFT ML model 415, *i.e.,* providing positive or negative rewards 425. The RLHF may allow the servers (*e.g*., servers 404, 406) to continue iteratively updating the reward model 420 and/or the policy 235. As a result, the language model 450 may be retrained and/or fine-tuned based upon the human feedback via the RLHF process, and/or throughout continuing conversations may become increasingly efficient.

Although multiple servers 402, 404, 406 are depicted in the exemplary block and logic diagram 400, each providing one of the three steps of the overall language model 450 training, fewer and/or additional servers may be utilized and/or may provide the one or more steps of the language model 450 training. In one aspect, one server, such as server 110, may provide the entire language model 450 training.

In some embodiments, the server 404 may train and/or fine-tune the language model 450 in connection with a feedback server (such as the server 110 or an external computing device) that provides feedback to the language model 450. While training and/or fine-tuning the language model 450, the language model 450 may output one or more immigration documents based upon an input prompt. The feedback server may receive the one or more immigration documents output by the language model 450 and then receive edits to the immigration documents made by an immigration attorney or legal staff. The feedback server may then provide the edit to the server 404. Accordingly, the reward model 420 and/or the adjustment function 438 may utilize the edits to the generated immigration documents as input to determine the scalar reward 425 and/or the adjustment 440 associated with the one or more recommendations. In this way, the language model 450 may be trained and/or fine-tuned to generate better immigration document text.

### EXEMPLARY ML LANGUAGE MODEL FOR GENERATING IMMIGRATION DOCUMENTS

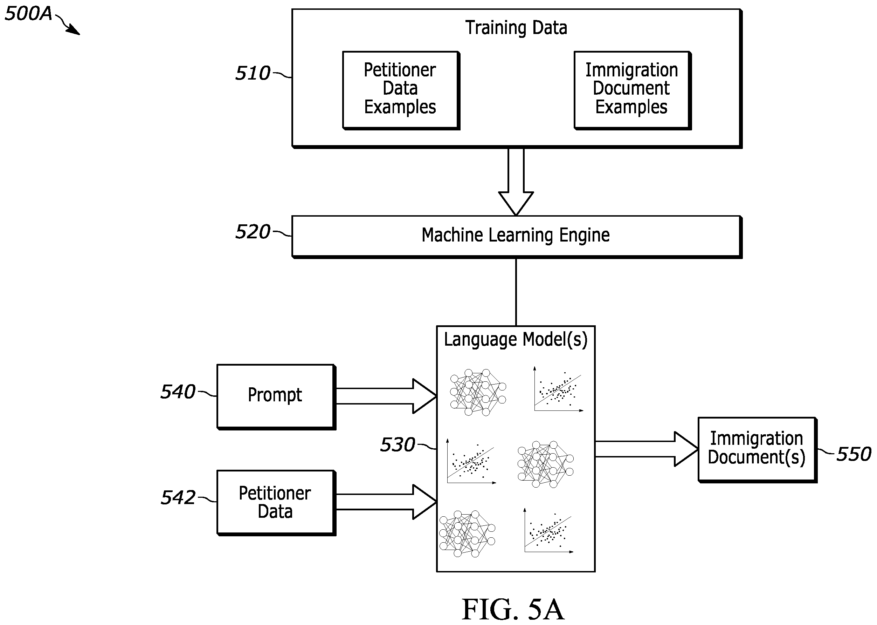

Figure 5A schematically illustrates how an ML language model may generate immigration documents 550. Some of the blocks in Figure 5A represent hardware and/or software components (*e.g*., block 520), other blocks represent data structures or memory storing these data structures, registers, or state variables (*e.g*., blocks 510), and other blocks represent output data (*e.g*., block 550). Input and output signals are represented by arrows.

An ML engine 520 may include one or more hardware and/or software components, such as the MLTM 152 and/or the MLOM 154, to obtain, create, (re)train, operate and/or save one or more language models 530. To generate a language model 530, the ML engine 520 may use training data 510.

As described herein, the server such as server 110 may obtain and/or have available various types of training data 510 (*e.g*., stored in the customer data database 162). In an aspect, the training data 510 may labeled to aid in training, retraining and/or fine-tuning the language model 530. The training data 510 may include petitioner data examples and immigration document examples. The petitioner data examples may include identifying information of the petitioner, the petitioner's employer, case type, etc. The immigration document examples may include cover letters, support letters, and other document types for one or more case types. The training data 510 may be in a structured or unstructured format. New training data 510 may be used to retrain or update the language model 530.

While the example training data includes indications of various types of training data 510, this is merely an example for ease of illustration only. The training data 510 may include any suitable data that may indicate associations between petitioner data and immigration documents.

In an aspect, the server may continuously update the training data 510, *e.g*., based upon obtaining data sources related to newly generated immigration documents, or any other training data. Subsequently, the language model 530 may be retrained/fine-tuned based upon the updated training data 510. Accordingly, the generation of immigration documents may improve over time.

In an aspect, the ML engine 520 may process and/or analyze the training data 510 (*e.g*., via MLTM 152) to train the language model 530 to generate the immigration document(s) 550. The language model 530 may be trained to generate the immigration document(s) 550 via a neural network, deep learning model, Transformer-based model, generative pretrained transformer (GPT), although any type of applicable ML model/algorithm may be used, including training using one or more of supervised learning, semi-supervised learning, and/or reinforcement learning.

Once trained, the language model 530 may perform operations on one or more data inputs to produce a desired data output. In one aspect, the language model 530 may be loaded at runtime (*e.g.,* by the MLOM 154) from a memory (*e.g.,* the memory 124 of the server 110) to process a prompt 540 and/or petitioner data 542 input. The server, such as server 110, may generate the prompt 540 and obtain the petitioner data 542 and use them as input to generate the immigration document(s) 550.

In one aspect, the immigration document(s) 550 may include a cover letter and/or support letters. Once the immigration document(s) 550 are generated by language model 550, they may be saved in the case queue 146 with the associated case.

### EXEMPLARY ML OCR MODEL FOR RECOGNIZING TEXT IN IMAGES

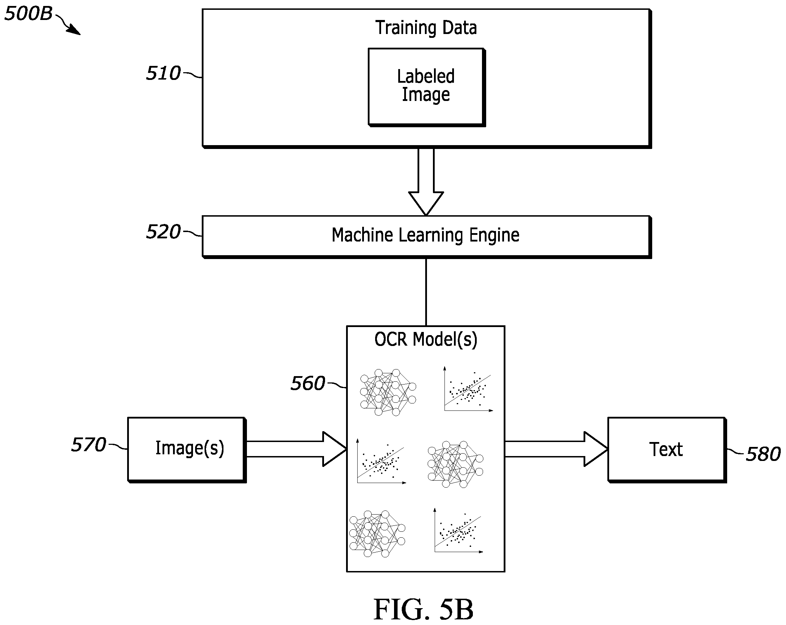

Figure 5B schematically illustrates how an ML OCR model may recognize text in images. To generate an OCR model 560, the ML engine 520 may use training data 510. The training data 510 may include labeled image data. The labeled image data may include images of typed and/or handwritten text. The labeled image data may include the text corresponding to the typed and/or handwritten text. The training data 510 may be in a structured or unstructured format. While the example training data includes indications of various types of training data 510, this is merely an example for ease of illustration only. The training data 510 may include any suitable data that may indicate associations between images and text.

In an aspect, the server 110 may continuously update the training data 510, *e.g.,* based upon obtaining additional images of text, or any other training data. Subsequently, the OCR model 560 may be retrained/fine-tuned based upon the updated training data 510. Accordingly, the generation of text from images may improve over time.

In an aspect, the ML engine 520 may process and/or analyze the training data 510 (*e.g*., via MLTM 152) to train the OCR model 560 to generate the text 580. The OCR model 560 may be trained to generate the text 580 via a neural network, such as a convolutional neural network (CNN), although any type of applicable ML model/algorithm may be used, including training using one or more of supervised learning, semi-supervised learning, and/or reinforcement learning.

Once trained, the OCR model 560 may perform operations on one or more data inputs to produce a desired data output. In one aspect, the OCR model 560 may be loaded at runtime (*e.g.,* by the MLOM 154) from a memory (*e.g.,* the memory 124 of the server 110) to process one or more images 570 including typed and/or handwritten text. The server, such as server 110, may obtain the images 570 and use them as input to generate the text 580.

In one aspect, the text 580 may include a string of characters, e.g., letters, digits, punctuation, etc. Once the text 580 is generated by OCR model 560, it may be used by a quality control bot 136 to perform visual checks comparing intake document scans to text in draft petitions.

Improvements to the underlying computing system include the ML models, such as the LLM and the OCR model, which may receive feedback regarding their output and improve their predictions over time.

### EXEMPLARY COMPUTER-IMPLEMENTED METHOD FOR GENERATING IMMIGRATION PETITIONS

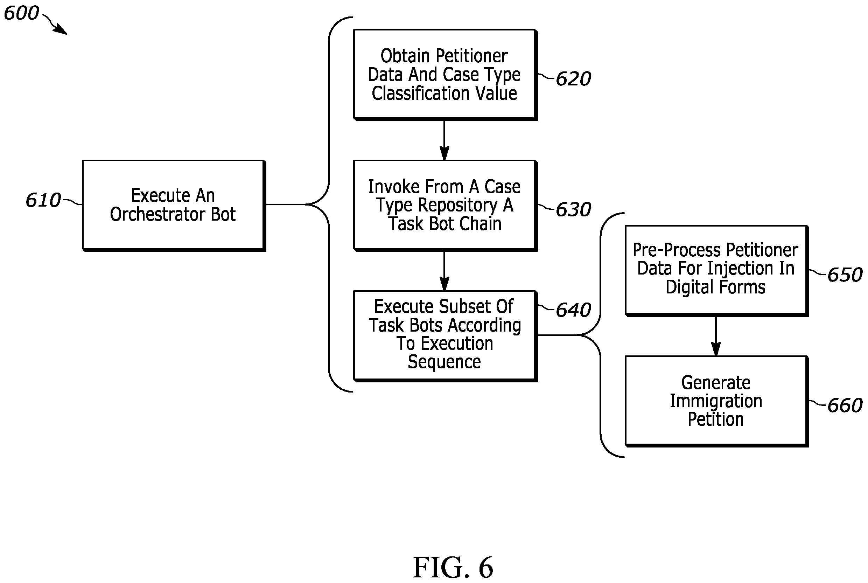

Figure 6 illustrates a flow diagram of an exemplary computer-implemented method 600 for generating an immigration petition. One or more steps of the computer-implemented method 600 may be implemented as a set of instructions stored on a computer-readable memory and executable on one or more processors. The computer-implemented method 600 of Figure 6 may be implemented via a system, such as the server 110 and/or the client device 170.

In one aspect, the computer-implemented method 600 may include at block 610 executing an orchestrator bot, such as orchestrator bot 132. Executing the orchestrator bot may cause one or more of blocks 620 - 640 to be performed.

In one aspect, the computer-implemented method 600 may include at block 620 the orchestrator bot 132 obtaining petitioner data and a case type classification value as input. The petitioner data may include identification information of the petitioner, employer information, etc. The petitioner data may be obtained from the customer data database 162 and/or from user input via the automation center app 128. The case type classification value may be a selected case type, e.g., H-1B visa, from a plurality of predefined case types.

In one aspect, the computer-implemented method 600 may include at block 630 the orchestrator bot invoking, from a case type repository based on the case type classification value, a task bot chain. The case type repository may be included in the case type rules database 164. Each case type classification value may have its own associated task bot chain. The task bot chain may identify one or more task bots from a plurality of task bots, e.g., task bots 134, to create a subset of task bots. Each of the plurality of task bots 134 may be configured to perform an action. The subset of task bots may be configured to implement an execution sequence.

In one aspect, the computer-implemented method 600 may include at block 640 the orchestrator bot executing the subset of task bots according to the execution sequence. Executing the subset of task bots may cause one or more of blocks 650 and 660 to be performed. The orchestrator bot 132 may monitor an execution status of the subset of task bots.

In one aspect, the computer-implemented method 600 may include a task bot determining if one or more digital forms is expired. The expiration determination may include comparing a revision date of a digital form to a revision date of an available digital form on a website, e.g., a government website. Responsive to determining that any of the one or more digital forms is expired, the computer-implemented method 600 may include downloading the available digital form from the website to replace the expired digital form.

In one aspect, the computer-implemented method 600 may include a task bot downloading a petitioner travel history from a website. Downloading the petitioner travel history may include providing identifying information of the petitioner to the website.

In one aspect, the computer-implemented method 600 may include at block 650 a task bot preprocessing the petitioner data for injection into one or more digital forms. Preprocessing the petitioner data may include identifying and extracting subsets of data from the petitioner data. Injection may include transforming and/or inserting the subsets of data into fields within the one or more digital forms.

In one aspect, the computer-implemented method 600 may include a task bot inserting signatures into the one or more digital forms. The signatures may be scanned signatures of the attorney, employer, and/or petitioner.

In one aspect, the computer-implemented method 600 may include a task bot generating a cover letter and/or a support letter. The cover letter and/or the support letter may be generated using a trained ML language model, such as LLM 142, language model 450, or language model 530.

In one aspect, the computer-implemented method 600 may include a task bot completing one or more web forms on a website using the petitioner data. Completing the web forms may include identifying and extracting subsets of data from the petitioner data and transforming and/or inserting the subsets of data into fields within the one or more web forms.

In one aspect, the computer-implemented method 600 may include at block 660 a task bot generating from the one or more digital forms the immigration petition. The immigration petition may be configured to be printed on paper of a given size, e.g., 8.5" x 11".

In one aspect, the computer-implemented method 600 may include a task bot generating a shipping label. The shipping label may be used for mailing the completed immigration petition to a government agency.

In one aspect, the computer-implemented method 600 may include the orchestrator bot executing one or more quality control bots, e.g., quality control bots 136. In one aspect, the computer-implemented method 600 may include a quality control bot examining the immigration petition for potential errors. The examination may be based upon a predefined set of validation rules. Responsive to finding potential errors, the quality control bot may output a notification regarding the potential errors. In one aspect, the computer-implemented method 600 may include a quality control bot extracting text data from one or more scanned images in the petitioner data. The text data may be extracted using an ML model trained to perform OCR, e.g., OCR model 144 or OCR model 560. The quality control bot may compare the text data to data in the immigration petition.

It should be understood that not all blocks of the exemplary flow diagram 600 are required to be performed. Moreover, the exemplary flow diagram 600 is not mutually exclusive (i.e., block(s) from exemplary flow diagram 600 may be performed in any particular implementation).

The present disclosure includes specific features other than what is well-understood, routine, conventional activity in the field, or adding unconventional steps that confine the claim to a particular useful application, e.g., generating the immigration petition configured for printing on a paper of a given size.

### ADDITIONAL CONSIDERATIONS

Although the text herein sets forth a detailed description of numerous different embodiments, it should be understood that the legal scope of the invention is defined by the words of the claims set forth at the end of this patent. The detailed description is to be construed as exemplary only and does not describe every possible embodiment, as describing every possible embodiment would be impractical, if not impossible. One could implement numerous alternate embodiments, using either current technology or technology developed after the filing date of this patent, which would still fall within the scope of the claims.

It should also be understood that, unless a term is expressly defined in this patent using the sentence "As used herein, the term 'XYZ' is hereby defined to mean..." or a similar sentence, there is no intent to limit the meaning of that term, either expressly or by implication, beyond its plain or ordinary meaning, and such term should not be interpreted to be limited in scope based upon any statement made in any section of this patent (other than the language of the claims). To the extent that any term recited in the claims at the end of this disclosure is referred to in this disclosure in a manner consistent with a single meaning, that is done for sake of clarity only so as to not confuse the reader, and it is not intended that such claim term be limited, by implication or otherwise, to that single meaning. Finally, unless a claim element is defined by reciting the word "means" and a function without the recital of any structure, it is not intended that the scope of any claim element be interpreted based upon the application of 35 U.S.C. § 112(f).

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in exemplary configurations may be implemented as a combined structure or component. Similarly, structures and functionality presented as a single component may be implemented as separate components. These and other variations, modifications, additions, and improvements fall within the scope of the subject matter herein.

Additionally, certain embodiments are described herein as including logic or a number of routines, subroutines, applications, or instructions. These may constitute either software (code embodied on a non-transitory, tangible machine-readable medium) or hardware. In hardware, the routines, etc., are tangible units capable of performing certain operations and may be configured or arranged in a certain manner. In exemplary embodiments, one or more computer systems (e.g., a standalone, client or server computer system) or one or more hardware modules of a computer system (e.g., a processor or a group of processors) may be configured by software (e.g., an application or application portion) as a hardware module that operates to perform certain operations as described herein.

In various embodiments, a hardware module may be implemented mechanically or electronically. For example, a hardware module may comprise dedicated circuitry or logic that is permanently configured (e.g., as a special-purpose processor, such as a field programmable gate array (FPGA) or an application-specific integrated circuit (ASIC) to perform certain operations). A hardware module may also comprise programmable logic or circuitry (e.g., as encompassed within a processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) may be driven by cost and time considerations.

Accordingly, the term "hardware module" should be understood to encompass a tangible entity, be that an entity that is physically constructed, permanently configured (e.g., hardwired), or temporarily configured (e.g., programmed) to operate in a certain manner or to perform certain operations described herein. Considering embodiments in which hardware modules are temporarily configured (e.g., programmed), each of the hardware modules need not be configured or instantiated at any one instance in time. For example, where the hardware modules comprise a processor configured using software, the processor may be configured as respective different hardware modules at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple of such hardware modules exist contemporaneously, communications may be achieved through signal transmission (e.g., over appropriate circuits and buses) that connect the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of exemplary methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some exemplary embodiments, comprise processor-implemented modules.

Similarly, the methods or routines described herein may be at least partially processor-implemented. For example, at least some of the operations of a method may be performed by one or more processors or processor-implemented hardware modules. The performance of certain of the operations may be distributed among the one or more processors, not only residing within a single machine, but deployed across a number of machines. In some example embodiments, the processor or processors may be located in a single location (e.g., within a home environment, an office environment or as a server farm), while in other embodiments the processors may be distributed across a number of geographic locations.

Unless specifically stated otherwise, discussions herein using words such as processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein any reference to "one embodiment" or "an embodiment" means that a particular element, feature, structure, or characteristic described in connection with the embodiment may be included in at least one embodiment. The appearances of the phrase "in one embodiment" in various places in the specification are not necessarily all referring to the same embodiment.

Some embodiments may be described using the expression "coupled" and "connected" along with their derivatives. For example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of the description. This description, and the claims that follow, should be read to include one or at least one and the singular also includes the plural unless it is obvious that it is meant otherwise.

Upon reading this disclosure, those of skill in the art will appreciate still additional alternative structural and functional designs for the approaches described herein. Therefore, while particular embodiments and applications have been illustrated and described, it is to be understood that the disclosed embodiments are not limited to the precise construction and components disclosed herein. Various modifications, changes and variations, which will be apparent to those skilled in the art, may be made in the arrangement, operation and details of the method and apparatus disclosed herein without departing from the spirit and scope defined in the appended claims.

The particular features, structures, or characteristics of any specific embodiment may be combined in any suitable manner and in any suitable combination with one or more other embodiments, including the use of selected features without corresponding use of other features. In addition, many modifications may be made to adapt a particular application, situation or material to the essential scope and spirit of the present invention. It is to be understood that other variations and modifications of the embodiments of the present invention described and illustrated herein are possible in light of the teachings herein and are to be considered part of the spirit and scope of the present invention.

While the preferred embodiments of the invention have been described, it should be understood that the invention is not so limited and modifications may be made without departing from the invention. The scope of the invention is defined by the appended claims, and all devices that come within the meaning of the claims, either literally or by equivalence, are intended to be embraced therein.

It is therefore intended that the foregoing detailed description be regarded as illustrative rather than limiting, and that it be understood that it is the following claims, including all equivalents, that are intended to define the spirit and scope of this invention.

## Claims

1. A system for generating an immigration petition, comprising:
a server comprising one or more processors and a memory storing an orchestrator bot and a plurality of task bots, wherein each of the plurality of task bots is configured to execute an action,
wherein the orchestrator bot, when executed by the one or more processors, causes the one or more processors to:
obtain petitioner data and a case type classification value as input,
invoke from a case type repository, based on the case type classification value, a task bot chain, wherein the task bot chain identifies one or more task bots selected from the plurality of task bots to create a subset of task bots to implement an execution sequence, and
execute the subset of task bots according to the execution sequence,
wherein the subset of task bots, when executed by the one or more processors, causes the one or more processors to:
pre-process the petitioner data for injection into one or more digital forms, and
generate, from the one or more digital forms, the immigration petition configured for printing on a paper of a given size.

2. The system of claim 1, wherein the subset of task bots, when executed by the one or more processors, causes the one or more processors to:
determine if any of the one or more digital forms is expired by comparing a revision date on the digital form to a revision date of an available digital form on a website, and
responsive to determining that any of the one or more digital forms is expired, download the available digital form from the website.

3. The system of claim 1, wherein the subset of task bots, when executed by the one or more processors, causes the one or more processors to:
generate, using a trained machine learning language model, a cover letter and a support letter.

4. The system of claim 1, wherein the subset of task bots, when executed by the one or more processors, causes the one or more processors to execute at least one of:
(a) complete one or more web forms on a website using the petitioner data;
(b) download a petitioner travel history from a website;
(c) insert signatures into the one or more digital forms; and/or
(d) generate a shipping label.

5. The system of claim 1, wherein the orchestrator bot, when executed by the one or more processors, causes the one or more processors to:
monitor an execution status of the subset of task bots.

6. The system of claim 1, wherein the memory further stores one or more quality control bots,
wherein the orchestrator bot, when executed by the one or more processors, causes the one or more processors to:
execute the one or more quality control bots; and
wherein the one or more quality control bots, when executed by the one or more processors, causes the one or more processors to:
examine the immigration petition for potential errors based on a predefined set of validation rules, and
responsive to finding potential errors, output a notification regarding the potential errors.

7. The system of claim 6, wherein the one or more quality control bots, when executed by the one or more processors, further causes the one or more processors to:
extract, using a machine learning model trained to perform optical character recognition, text data from one or more scanned images in the petitioner data; and
compare the text data to data in the immigration petition.

8. A computer-implemented method for generating an immigration petition, comprising:
executing, by one or more processors communicatively coupled to a memory, an orchestrator bot to cause the one or more processors to:
obtain petitioner data and a case type classification value as input,
invoke from a case type repository, based on the case type classification value, a task bot chain, wherein the task bot chain identifies one or more task bots selected from a plurality of task bots, a plurality of task bots, wherein each of the plurality of task bots is configured to execute an action, to create a subset of task bots to implement an execution sequence, and
execute the subset of task bots according to the execution sequence,
wherein the subset of task bots, when executed by the one or more processors, causes the one or more processors to:
pre-process the petitioner data for injection into one or more digital forms, and
generate, from the one or more digital forms, the immigration petition configured for printing on a paper of a given size.

9. The method of claim 8, wherein the subset of task bots, when executed by the one or more processors, causes the one or more processors to:
determine if any of the one or more digital forms is expired by comparing a revision date on the digital form to a revision date of an available digital form on a website, and
responsive to determining that any of the one or more digital forms is expired, download the available digital form from the website.

10. The method of claim 8, wherein the subset of task bots, when executed by the one or more processors, causes the one or more processors to:
generate, using a trained machine learning language model, a cover letter and a support letter.

11. The method of claim 8, wherein the subset of task bots, when executed by the one or more processors, causes the one or more processors to:
(a) complete one or more web forms on a website using the petitioner data;
(b) download a petitioner travel history from a website;
(c) insert signatures into the one or more digital forms; and/or
(d) generate a shipping label.

12. The method of claim 8, wherein the orchestrator bot, when executed by the one or more processors, causes the one or more processors to:
monitor an execution status of the subset of task bots.

13. The method of claim 8, wherein the memory further stores one or more quality control bots,
wherein the orchestrator bot, when executed by the one or more processors, causes the one or more processors to:
execute the one or more quality control bots; and
wherein the one or more quality control bots, when executed by the one or more processors, causes the one or more processors to:
examine the immigration petition for potential errors based on a predefined set of validation rules, and
responsive to finding potential errors, output a notification regarding the potential errors.

14. The method of claim 13, wherein the one or more quality control bots, when executed by the one or more processors, further causes the one or more processors to:
extract, using a machine learning model trained to perform optical character recognition, text data from one or more scanned images in the petitioner data; and
compare the text data to data in the immigration petition.
